# FASCICULE DE BREVET EUROPEEN

(11) **EP 2 452 223 B1**
(45) Date de publication et mention de la délivrance du brevet: **02.09.2015**
(21) Numéro de dépôt: 10737974.5
(22) Date de dépôt: 09.06.2010
(51) Int. Cl.: G02B 27/01, G02B 7/02, H04N 13/04

(54) **AFFICHEUR DE TYPE BINOCULAIRE COMPORTANT UNE PAIRE DE LUNETTES**
BINOKULARANZEIGE WELCHE EIN LINSENPAAR BEINHALTET
BINOCULAR TYPE DISPLAY COMPRISING A PAIR OF GLASSES

(30) Priorité: 10.07.2009 FR 0954841
(43) Date de publication de la demande: 16.05.2012
(73) Titulaire: Essilor International (Compagnie Générale d'Optique), 94220 Charenton-le-Pont (FR)
(72) Inventeur: BILLON, Bertrand, F-94220 Charenton-le-Pont (FR); BUCHON, Cédric, F-94220 Charenton-le-Pont (FR); ROPTIN, Vincent, F-94220 Charenton-le-Pont (FR)
(74) Mandataire: Lenne, Laurence
(86) Numéro de dépôt international: PCT/FR2010/051143
(87) Numéro de publication internationale: WO 2011/004089

(56) Documents cités:
- US-A- 5 347 400
- US-A- 5 671 087
- US-A1- 2003 184 868
- US-B1- 6 538 624

## Description

La présente invention se rapporte à un procédé de réglage d'un afficheur de type binoculaire comportant une paire de lunettes et équipé d'un imageur optique pour chaque oeil destiné à permettre la projection d'informations, de type images ou multimédia.

Le mot « binoculaire » désigne un afficheur assurant la réalisation d'une image virtuelle pour chaque oeil du porteur.

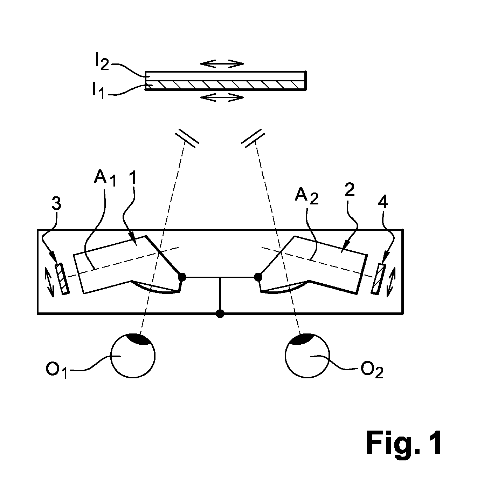

Un exemple d'afficheur binoculaire connu est représenté sur la figure 1.

Dans cet afficheur, les imageurs optiques 1, 2 sont destinés à mettre en forme les faisceaux optiques issus d'un système électronique et optique de génération de faisceaux lumineux à partir d'un écran miniature 3, 4. Chaque imageur optique dirige les faisceaux optiques vers chaque oeil du porteur O1, O2 pour permettre la visualisation du contenu informationnel.

Dans un tel afficheur, un signal électronique porteur d'une information est amené à chaque écran miniature par un câble. A partir de ce signal, l'écran miniature, éclairé par un projecteur de fond, génère une image pixellisée correspondant à l'information. A titre d'exemple, il peut être utilisé un écran « KOPIN Cyberdisplay 320 color » générant des images de 320 x 240 pixels et d'une dimension de 4,8 mm x 3,6 mm. Les écrans sont référencés au moyen d'une interface mécanique par rapport aux imageurs optiques. Une coque de protection protège tout ou partie de l'ensemble.

Pour une bonne visualisation avec un tel afficheur, il est important que l'image I1 vue par l'oeil gauche et l'image I2 vue par l'oeil droit soient superposées.

Actuellement, afin d'aligner ces images droite et gauche d'un afficheur binoculaire, il existe au niveau du procédé d'assemblage une étape qui consiste à déplacer physiquement les écrans miniatures 3, 4 perpendiculairement à l'axe optique A1, A2 des imageurs optiques ainsi qu'à les tourner dans leur plan, de façon à déplacer au moins une des images virtuelles de façon correspondante et ainsi amener la superposition des images droite et gauche.

Plus précisément, le principe d'alignement connu consiste à fixer le premier écran, par exemple le gauche 3 par rapport à l'imageur gauche 1, typiquement par collage, puis à déplacer l'écran droit 4 perpendiculairement à l'axe optique A2 de l'imageur droit et éventuellement à le tourner dans son plan, pour amener l'image droite en coïncidence avec l'image gauche et ceci fait, à le bloquer en position alignée par un collage.

Ce type de solution nécessite la conception de coques ou de carters permettant ce déplacement transversal des écrans miniatures pour ce réglage, ainsi qu'un système de blocage temporaire avant la fixation définitive par un collage.

Ce procédé exige une étape longue et délicate du point de vue de la manipulation, ce qui signifie en pratique des difficultés à obtenir un bon rendement.

Enfin et surtout, ce type de réglage est fastidieux, car il nécessite des déplacements micrométriques de l'écran et donc un agencement de réglage mécanique micrométrique complexe quant à sa constitution et à sa mise en oeuvre. Les documents US5347400 A et US 6538624 B1 décrivent des afficheurs binoculaires avec des moyens de réglage afin d'assurer la superposition des images. Le document de brevet US 2003/0184868 divulgue un procédé de réglage d'un afficheur binoculaire comprenant, pour chaque oeil du porteur, un imageur optique destiné à mettre en forme des faisceaux optiques correspondant à une image émise par un dispositif de génération de faisceaux et à les diriger vers chaque oeil du porteur pour permettre la visualisation d'un contenu informationnel contenu dans une image virtuelle, cet afficheur étant associé à une paire de lunettes comportant deux lentilles supporté par une monture. Selon ce document, l'agencement formant imageur peut être déplacé afin d'effectuer le réglage.

Ce type de réglage est également fastidieux, car il nécessite des déplacements micrométriques de l'imageur et donc un agencement de réglage mécanique micrométrique complexe quant à sa constitution et à sa mise en oeuvre.

Il a donc été envisagé dans le document de brevet WO 2007/125257 de procéder à l'alignement des images droite et gauche sans aucun déplacement physique des écrans miniatures par déplacement électronique de l'image émise sur l'écran, afin d'obtenir une position réglée de cette image dans cet écran correspondante à une superposition des deux images virtuelles.

Cependant, un tel procédé de réglage électronique s'avère insuffisant en amplitude de réglage, si l'on veut obtenir une taille d'image virtuelle relativement importante. De plus, l'opération de rotation électronique de l'image serait très lourde et complexe à effectuer.

L'invention résout ces problèmes en proposant un procédé mécanique de réglage d'un afficheur binoculaire qui puisse être mis en oeuvre au moyen d'éléments standards, les déplacements de réglage occasionnés étant de l'ordre du dixième de millimètre.

L'invention est définie par sa revendication 1.

De préférence, ladite pièce centrale est formée d'un étrier réglable en hauteur sur une pièce solidaire de la monture.

Avantageusement, chaque branche dudit étrier comporte deux logements cylindriques d'axe longitudinal parallèle au plan de symétrie de l'étrier et recevant lesdits éléments superposés réglables en position selon cet axe longitudinal.

Avantageusement, ladite sphère est disposée dans le même plan horizontal que l'élément inférieur du premier moyen de fixation et de réglage.

Avantageusement, lesdits réglages sont à effectuer au moyen de vis.

L'invention consiste donc en un procédé de réglage d'un afficheur binoculaire comprenant, pour chaque oeil du porteur, un imageur optique destiné à mettre en forme des faisceaux optiques correspondant à une image émise par un dispositif de génération de faisceaux et à les diriger vers chaque oeil du porteur pour permettre la visualisation d'un contenu informationnel contenu dans une image virtuelle, cet afficheur étant associé à une paire de lunettes comportant deux lentilles supporté par une monture, consistant à déplacer par rapport à ladite monture au moins une dite lentille selon trois degrés de liberté, chaque dit imageur étant contenue dans ladite lentille de ladite paire de lunettes, afin d'obtenir une superposition des deux images virtuelles.

Ce procédé de réglage nécessite des déplacements de l'ordre du dixième de millimètre et peut donc être réalisé avec des outils, vis et tournevis ou équivalents, standards.

De préférence, ce réglage est effectué en usine ou par l'opticien et les divers éléments constitutifs sont ensuite capotés et protégés.

Selon un mode de réalisation préféré, ledit déplacement comprend une première étape de rotation d'au moins une lentille dans son plan, afin d'obtenir deux images virtuelles parallèles.

De préférence, ledit déplacement comprend une deuxième étape de rotation d'au moins une lentille autour d'un axe horizontal, afin d'obtenir un alignement sur un axe horizontal des deux images virtuelles.

De préférence, ledit déplacement comprend une troisième étape de rotation d'au moins une lentille autour d'un axe incliné, afin d'obtenir un alignement sur un axe vertical des deux images virtuelles.

L'invention est décrite ci-après plus en détail à l'aide de figures ne représentant qu'un mode de réalisation préféré de l'invention.
La figure 1 schématise un exemple d'afficheur binoculaire connu.
La figure 2 est une vue en perspective d'un afficheur binoculaire conforme à l'invention, dépourvu des branches de la paire de lunettes.
La figure 3 est une vue en perspective des cerclages de lentilles de cet afficheur.
La figure 4 est une vue en perspective de cet afficheur, en coupe selon le plan IV de la figure 2.
La figure 5 est une vue en perspective de cet afficheur, en coupe selon le plan V de la figure 2.
La figure 6 est une vue partielle en perspective et en coupe longitudinale de cet afficheur.
La figure 7 est une vue partielle en perspective et en coupe de cet afficheur.

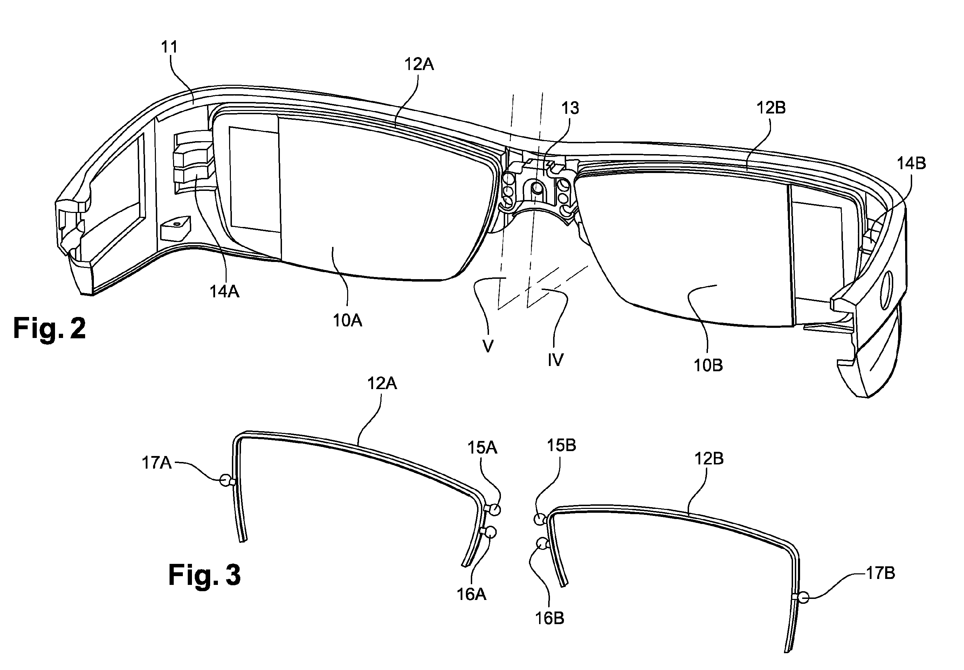

Comme représenté sur la figure 2, un afficheur binoculaire conforme à l'invention comprend, pour chaque oeil du porteur, un imageur optique, par exemple tel que décrit sur la figure 1, destiné à mettre en forme des faisceaux optiques correspondant à une image émise par un dispositif de génération de faisceaux et à les diriger vers chaque oeil du porteur pour permettre la visualisation d'un contenu informationnel contenu dans une image virtuelle.

Chaque imageur étant intégré dans une lentille 10A, 10B d'une paire de lunettes équipé d'une monture de support 11 des lentilles, pour la mise en oeuvre du procédé de réglage conforme à l'invention.

Cet afficheur comporte un cerclage total ou partiel 12A, 12B de chaque lentille, chaque cerclage comportant deux moyens de fixation et de réglage, un premier moyen de fixation et de réglage connecté à une pièce centrale 13 connectée à la monture 11 au-dessus du repose-nez et un second moyen de fixation et de réglage connecté à une pièce latérale 14A, 14B solidaire de la monture à proximité de chaque branche de la monture.

Comme bien visible sur la figure 3, le premier moyen de fixation et de réglage est constitué de deux éléments 15A, 16A, 15B, 16B superposés de section circulaire dans le plan de la lentille. Selon le mode de réalisation, ces éléments sont des sphères, mais elles peuvent être également être des disques circulaires dirigés parallèlement au plan de la lentille correspondante.

Le second moyen de fixation et de réglage est constitué d'une sphère 17A, 17B disposée dans la pièce latérale 14A, 14B selon une articulation en rotule.

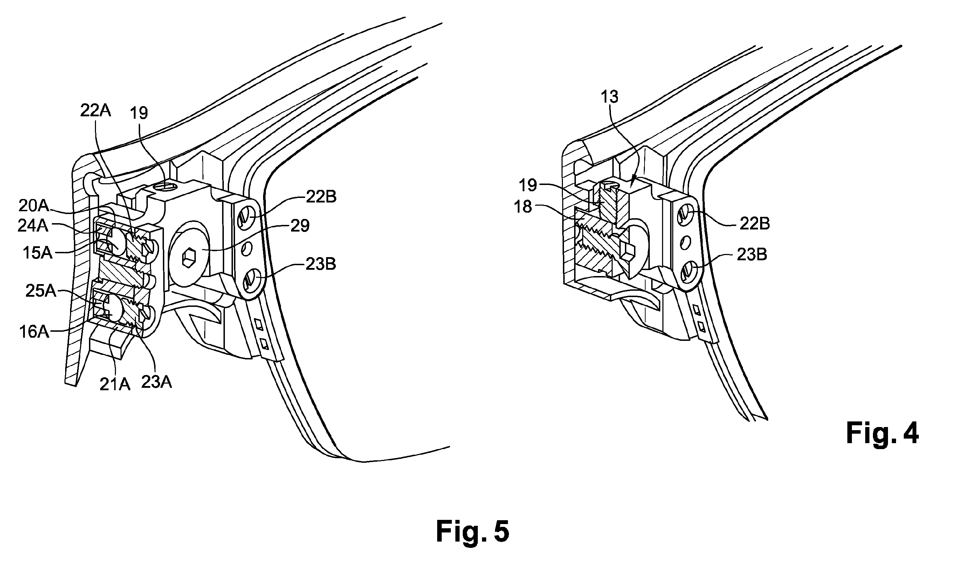

Comme visibles sur les figures 2, 4, 5 et 6, la pièce centrale 13 est formée d'un étrier réglable en hauteur sur une pièce 18 solidaire de la monture, par exemple collée sur la monture. Une première vis de réglage 19 vissée dans la base de l'étrier et en appui sur le cylindre 18 permet d'ajuster la position en hauteur de cet étrier sur le cylindre 18 à l'encontre de l'effort exercé par un fil élastique 19' précontraint sous la pièce fixe 18 et dont les extrémités sont bloquées dans les branches de l'étrier et assure une première étape de rotation d'au moins une lentille dans son plan, afin d'obtenir deux images virtuelles parallèles, comme il sera décrit plus précisément plus loin.

Chaque branche de l'étrier comporte deux logements cylindriques 20A, 21A d'axe longitudinal parallèle au plan de symétrie de l'étrier et recevant les éléments superposés 15A, 16A du cerclage, réglables en position selon cet axe longitudinal au moyen d'une deuxième vis 22A, 22B et d'une troisième vis 23A, 23B. Pour ce réglage en position, les éléments superposés 15A, 16A du cerclage sont en appui sur un élément compressible 24A, 25A, par exemple un tampon en élastomère, situé au fond du logement cylindrique 20A, 21A correspondants. Grâce à ces coulissements du cerclage, sont réalisées une deuxième étape de rotation d'au moins une lentille autour d'un axe horizontal, afin d'obtenir un alignement sur un axe horizontal des deux images virtuelles et une troisième étape de rotation d'au moins une lentille autour d'un axe incliné, afin d'obtenir un alignement sur un axe vertical des deux images virtuelles, comme il sera décrit plus précisément plus loin.

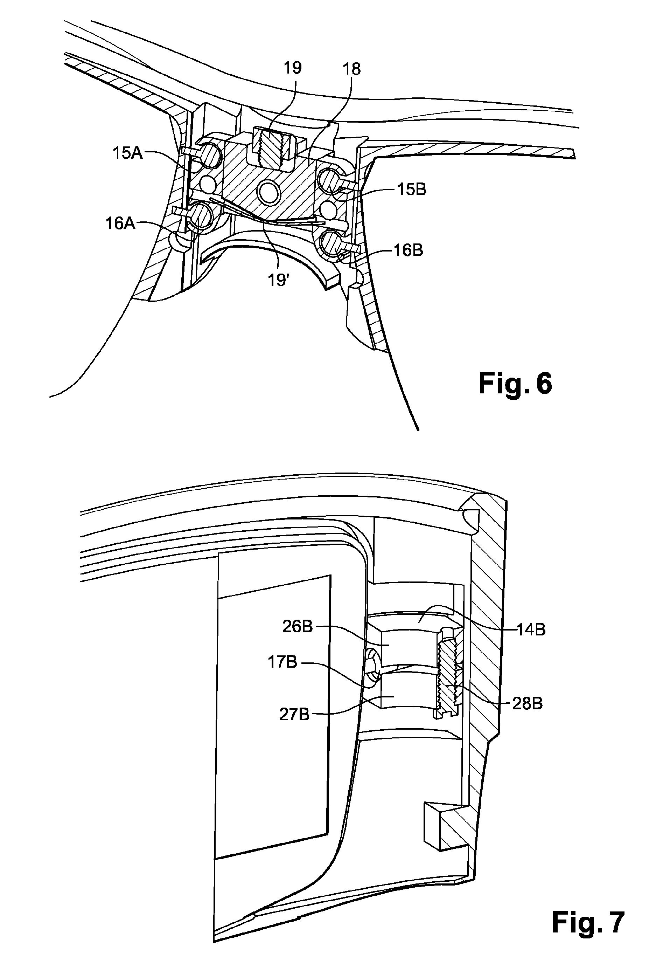

Comme représenté sur la figure 7, le second moyen de fixation et de réglage est constitué d'une sphère 17B disposée dans la pièce latérale 14B selon une articulation en rotule. Plus précisément, cette pièce latérale est constituée de deux berceaux 26B, 27B connectés par une vis 28B. Cette articulation par rotule est fixe. Selon le mode de réalisation illustré, cette sphère 17A, 17B est dans le même plan horizontal que l'élément inférieur 16A, 16B du premier moyen de fixation et de réglage.

Le procédé de réglage conforme à l'invention consiste à déplacer par rapport à la monture 11 au moins une lentille selon trois degrés de liberté, afin d'obtenir une superposition des deux images virtuelles.

Ce déplacement comprend :
- une première étape de rotation d'au moins une lentille dans son plan, afin d'obtenir deux images virtuelles parallèles, par ajustement de la première vis 19 qui entraîne le déplacement de l'étrier parallèlement à son plan de symétrie ; une fois la position alignée étant obtenue, l'étrier de la pièce centrale 13 est bloqué par vissage d'une vis centrale 29 à tête fraisée;
- une deuxième étape de rotation d'au moins une lentille autour d'un axe horizontal défini par la droite horizontale reliant la sphère de rotule 17A, 17B et l'élément inférieur 16A, 16B du premier moyen de fixation et de réglage, afin d'obtenir un déplacement vertical de l'image virtuelle correspondante et un alignement sur un axe horizontal des deux images virtuelles, par ajustement de la deuxième vis 22A, 22B qui entraîne un pivotement de la lentille autour de cet axe horizontal ;
- une troisième étape de rotation d'au moins une lentille autour d'un axe incliné défini par la droite inclinée reliant la sphère de rotule 17A, 17B et l'élément supérieur 15A, 15B du premier moyen de fixation et de réglage" afin d'obtenir un déplacement horizontal de l'image virtuelle correspondante et un alignement sur un axe vertical des deux images virtuelles, par ajustement de la troisième vis 23A, 23B qui entraîne un pivotement de la lentille autour de cet axe incliné.

## Revendications

1. Afficheur binoculaire, comprenant, une paire de lunettes comportant une monture (11) et deux lentilles (10A, 10B) supportées par la monture, ladite monture comportant deux branches, un repose-nez, une pièce centrale (13) connectée à ladite monture (11) au-dessus du repose-nez, deux pièces latérales (14A, 14B) solidaires de ladite monture (11) à proximité de chaque branche de la monture et un cerclage total ou partiel (12A, 12B) de chaque lentille (11A, 11B), chaque cerclage (12A, 12B) comportant deux moyens de fixation et de réglage, l'afficheur binoculaire comprenant en plus pour chaque oeil du porteur, un imageur optique destiné à mettre en forme des faisceaux optiques correspondant à une image émise par un dispositif de génération de faisceaux et à les diriger vers chaque oeil du porteur pour permettre la visualisation d'un contenu informationnel contenu dans une image virtuelle, lesdits moyens de fixation et de réglage assurant des étapes de déplacement, afin d'obtenir une superposition des deux images virtuelles, **caractérisé en ce que** chaque dit imageur est intégré dans ladite lentille (10A, 10B) de ladite paire de lunettes et **en ce qu'**un premier dit moyen de fixation et de réglage est constitué de deux éléments superposés (15A, 16A, 15B, 16B) de section circulaire dans le plan de la lentille et connecté à ladite pièce centrale (13) et un second dit moyen de fixation et de réglage est connecté à une des dites pièces latérales (14A, 14B) et constitué d'une sphère (17A, 17B) disposée dans ladite pièce latérale (14A, 14B) selon une articulation en rotule, lesdits moyens de fixation et de réglage assurant les étapes de déplacement suivantes :
- une première étape de rotation d'au moins une lentille (10A, 10B) dans son plan, afin d'obtenir deux images virtuelles parallèles,
- une deuxième étape de rotation d'au moins une lentille (10A, 10B) autour d'un axe horizontal défini par la droite horizontale reliant ladite sphère de rotule (17A, 17B) et l'élément inférieur (16A, 16B) du premier moyen de fixation et de réglage, afin d'obtenir un alignement sur un axe horizontal des deux images virtuelles et
- une troisième étape de rotation d'au moins une lentille (10A, 10B) autour d'un axe incliné défini par la droite inclinée reliant la sphère de rotule (17A, 17B) et l'élément supérieur (15A, 15B) du premier moyen de fixation et de réglage, afin d'obtenir un alignement sur un axe perpendiculaire audit axe horizontal des deux images virtuelles.

2. Afficheur selon la revendication précédente, **caractérisé en ce que** ladite pièce centrale (13) est formée d'un étrier réglable en hauteur sur une pièce (18) solidaire de la monture (11).

3. Afficheur selon la revendication précédente, **caractérisé en ce que** chaque branche dudit étrier comporte deux logements cylindriques (20A, 21A) d'axe longitudinal parallèle au plan de symétrie de l'étrier et recevant lesdits éléments superposés (15A, 16A) réglables en position selon cet axe longitudinal.

4. Afficheur selon l'une des revendications précédentes, **caractérisé en ce que** ladite sphère (17A, 17B) est disposée dans le même plan horizontal que l'élément inférieur (16A, 16B) du premier moyen de fixation et de réglage.

5. Afficheur selon l'une des revendications précédentes, **caractérisé en ce que** lesdits réglages sont à effectuer au moyens de vis (19, 22A, 23A, 22B, 23B).

## Patentansprüche

1. Binokularanzeige, umfassend ein Linsenpaar, umfassend eine Fassung (11) und zwei Linsen (10A, 10b), die von der Fassung getragen werden, wobei die Fassung zwei Schenkel, einen Nasensteg, einen Mittelteil (13), der mit der Fassung (11) über dem Nasensteg verbunden ist, zwei Seitenteile (14A, 14B), die mit der Fassung (11) in der Nähe jedes Schenkels der Fassung verbunden sind, und eine vollständige oder teilweise Umrandung (12A, 12B) jeder Linse (11A, 11B) umfasst, wobei jede Umrandung (12A, 12B) zwei Befestigungs- und Eisteilmittel umfasst, wobei die Binokularanzeige zusätzlich ferner für jedes Auge des Trägers einen optischen Bildgeber umfasst, der dazu bestimmt ist, optische Strahlen zu formen, die einem Bild entsprechen, das von einer Vorrichtung zur Erzeugung von Strahlen entsandt wird, und sie zu jedem Auge des Trägers zu leiten, um die Visualisierung eines Informationsinhalts, der in einem virtuellen Bild enthalten ist, zu ermöglichen, wobei die Befestigungs- und Einstellmittel Bewegungsschritte gewährleisten, um eine Überlagerung der beiden virtuellen Bilder zu erhalten, **dadurch gekennzeichnet, dass** jeder Bildgeber in die Linse (10A, 10B) des Linsenpaars integriert ist, und dass ein erstes Befestigungs- und Einstellmittel von zwei überlagerten Elementen (15A, 16A, 15B, 16B) mit kreisförmigem Querschnitt in der Ebene der Linse gebildet und mit dem Mittelteil (13) verbunden ist, und dass ein zweites Befestigungs- und Einstellmittel mit einem der Seitenteile (14A, 14B) verbunden und von einer Kugel (17A, 17B) gebildet ist, die in dem Seitenteil (14A, 14B) mit einem Kugelgelenk angeordnet ist, wobei die Befestigungs- und Einstellmittel die folgenden Bewegungsschritte gewährleisten:
- einen ersten Rotationsschritt mindestens einer Linse (10A, 10B) in ihrer Ebene, um zwei parallele virtuelle Bilder zu erhalten,
- einen zweiten Rotationsschritt mindestens einer Linse (10A, 10B) um eine Horizontalachse, die von der horizontalen Geraden definiert ist, die die Kugelgelenkkugel (17A, 17B) und das untere Element (16A, 16B) des ersten Befestigungs- und Einstellmittels verbindet, um eine Ausrichtung der beiden virtuellen Bilder auf einer Horizontalachse zu erhalten, und
- einen dritten Rotationsschritt mindestens einer Linse (10A, 10B) um eine geneigte Achse, die von der geneigten Geraden definiert ist, die die Kugelgelenkkugel (17A, 17B) und das obere Element (15A, 15B) des ersten Befestigungs- und Einstellmittels verbindet, um eine Ausrichtung auf einer Achse senkrecht auf die Horizontalachse der beiden virtuellen Bilder zu erhalten.

2. Anzeige nach dem vorhergehenden Anspruch, **dadurch gekennzeichnet, dass** der Mittelteil (13) von einem höhenverstellbaren Bügel auf einem mit der Fassung (11) verbundenen Teil (18) gebildet ist.

3. Anzeige nach dem vorhergehenden Anspruch, **dadurch gekennzeichnet, dass** jeder Schenkel des Bügels zwei zylindrische Aufnahmen (20A, 21A) mit einer Längsachse parallel zur Symmetrieebene des Bügels umfasst, die die überlagerten Elemente (15A, 16A) aufnehmen, die entlang dieser Längsachse in ihrer Position verstellbar sind.

4. Anzeige nach einem der vorhergehenden Ansprüche, **dadurch gekennzeichnet, dass** die Kugel (17A, 17B) in derselben Horizontalebene wie das untere Element (16A, 16B) des ersten Befestigungs- und Einstellmittels angeordnet ist.

5. Anzeige nach einem der vorhergehenden Ansprüche, **dadurch gekennzeichnet, dass** die Einstellungen mit Hilfe von Schrauben (19, 22A, 23A, 22B, 23B) durchzuführen sind.

## Claims

1. Binocular display, comprising, a pair of spectacles including a frame (11) and two lenses (10A, 10B) supported by the frame, said frame including two temples, a nose rest, a central part (13) connected to said frame (11) above the nose rest, two lateral parts (14A, 14B) securely fastened to said frame (11) in proximity to each temple of the frame and a full or partial rim (12A, 12B) encircling each lens (11A, 11B), each rim (12A, 12B) including two adjusting and fastening means, the binocular display in addition comprising for each eye of the wearer, an optical imager intended to shape optical beams corresponding to an image emitted by a beam-generating device and to direct them toward each eye of the wearer in order to allow an informational content contained in a virtual image to be seen, said fastening and adjusting means being used to carry out moving steps, in order to obtain a superposition of the two virtual images, **characterized in that** each of said imagers is integrated into said lens (10A, 10B) of said pair of spectacles and **in that** a first of said fastening and adjusting means consists of two superposed elements (15A, 16A, 15B, 16B) of circular cross-section in the plane of the lens and connected to said central part (13) and a second of said fastening and adjusting means is connected to one of said lateral parts (14A, 14B) and consists of a sphere (17A, 17B) placed in said lateral part (14A, 14B) so as to form a ball and socket joint, said fastening and adjusting means allowing the following moving steps to be carried out:
- a first step of rotating at least one lens (10A, 10B) in its plane, in order to obtain two parallel virtual images;
- a second step of rotating at least one lens (10A, 10B) about a horizontal axis defined by the straight horizontal line connecting said ball sphere (17A, 17B) and the lower element (16A, 16B) of the first fastening and adjusting means, in order to obtain an alignment with a horizontal axis of the two virtual images; and
- a third step of rotating at least one lens (10A, 10B) about an inclined axis defined by the inclined straight line connecting the ball sphere (17A, 17B) and the upper element (15A, 15B) of the first fastening and adjusting means, in order to obtain an alignment with an axis perpendicular to said horizontal axis of the two virtual images.

2. Display according to the preceding claim, **characterized in that** said central part (13) is formed from a stirrup the height of which is adjustable on a part (18) securely fastened to the frame (11).

3. Display according to the preceding claim, **characterized in that** each leg of said stirrup comprises two cylindrical housings (20A, 21A) of longitudinal axis parallel to the plane of symmetry of the stirrup and receiving said superposed elements (15A, 16A) the position of which is adjustable along this longitudinal axis.

4. Display according to one of the preceding claims, **characterized in that** said sphere (17A, 17B) is placed in the same horizontal plane as the lower element (16A, 16B) of the first fastening and adjusting means.

5. Display according to one of the preceding claims, **characterized in that** said adjustments are to be carried out by means of screws (19, 22A, 23A, 22B, 23B) .
